(19)

Europäisches
Patentamt
European
Patent Office
Office européen
des brevets

(11)  **EP 1 998 583 A1**

(12)  **EUROPEAN PATENT APPLICATION**

(43) Date of publication:
**03.12.2008  Bulletin 2008/49**

(51) Int Cl.:
**H04Q 7/38** (2006.01)

(21) Application number: **07252210.5**

(22) Date of filing: **30.05.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **British Telecommunications
Public Limited Company
London
EC1A 7AJ (GB)**

(72) Inventor: **The designation of the inventor has not
yet been filed**

(74) Representative: **Sayer, Robert David et al
BT Group Legal
Intellectual Property Department
PP C5A
BT Centre
81 Newgate Street
London EC1A 7AJ (GB)**

(54)  **Handover method**

(57)      The present invention provides a method that
can be used to determine a variable threshold that is
used to indicate when a mobile terminal should initiate a
handover from a first mobile network to a second mobile
network. Conventionally, if a radio signal parameter, such
as RSSI, falls below a threshold value then a handover
will be made. In the present invention, a handover man-
ager assesses the performance of the network and if it
is adequate then the threshold value at which a handover
is to' be performed is decreased. Preferably the mobile
terminal uses a normalised RSSI value as the parameter
that is assessed to determine whether a handover should
be made..

Figure 3

**Description**

The present invention relates to a method of determining whether a handover should be initiated in a mobile communications network.

Mobile communications networks are frequently implemented as cellular networks, in which a predefined geographical region is served by one or more frequencies of the communications network. If a user moves out of one cellular region (commonly referred to as a 'cell') into another cellular region, then the network must be able to transfer the user's communication session(s) from one cell to the other, preferably without having a significant effect upon the communication session(s). This form of handover is sometimes referred to as a 'horizontal handover'. A 'vertical handover' does not occur when a user is moving from one cell to another, but instead when a user's mobile terminal changes from a first communications protocol or technology (for example GPRS) to a second communications protocol (such as WiFi). Such a vertical handover may be required, or desired, in order to gain access to higher data transmission rates, lower latency, lower cost, preferred network operator, etc. It will be understood that a horizontal handover may initiate a vertical handover if a user moves into a new cell which comprises a desired transmission capability that was not present in the previous cell (or if the new cell does not support a transmission capability that was present in the previous cell).

Recent trends in technology deployment suggest that a future communications networks will comprise an all-IP (internet protocol) core network with different access technologies being used to access the IP core. For mobile terminals, access may be provided by GSM, UMTS, WiFi, Bluetooth etc. (and may be supplemented in the future by fourth generation wireless technologies) depending on the user's requirements. A mobile terminal may use different network technologies for accessing the network (i.e. GSM for voice, WiFi for data, etc.) and may simultaneously use the networks of more than one network provided in order to access the core network. With the advent of multi-radio protocol mobile terminals equipped with intelligent mobility management protocol/mechanism in the near future, it is expected that terminals will move freely and connect to any network depending on the connection availability, QoS requirements, connection cost, services required etc. To facilitate seamless handover across different heterogeneous networks, it is important to determine exactly when handover should take place by considering capability and QoS requirements of the MT, as well as the current and neighbouring network environmental conditions.

Known handover solutions, (for example I. Ramani et al, "SyncScan: Practical Fast Handoff for 802.11 Infrastructure Networks", Proceedings of the IEEE INFOCOM Conference, Miami, March 2005 & D. Jayaram and N. Sreenivasulu, "Seamless Call Transfer between Cellular (GSM) and Enterprise (VOWLAN) Networks", IASTED Conference Networks and Communication Systems, 2006) employ a static threshold value which governs exactly when handover should take place. This static threshold value is assigned based on the initial site survey for the particular network or could be simply pulled from the air by an access point or a terminal.

According to a first aspect of the present invention there is provided a method of operating a mobile terminal, the method comprising the steps of: a) establishing a handover threshold value for a network parameter, the threshold value being used in the determination of whether to perform a handover; b) decreasing the handover threshold value of the network parameter; c) determining a performance level of a wireless communications network to which the mobile terminal is connected; and d) if the network performance level determined in step c) is below a predetermined performance level, increasing the value of the handover threshold value, otherwise if the network performance level determined in step c) is equal to or greater than a predetermined network performance level retaining the value of the handover threshold value obtained in step b).

By providing a dynamic threshold value that can be defined by each mobile terminal then it is possible to provide a more fine-grained approach to the handover problem without the network overhead of determining and assigning a handover threshold to each of the mobile terminals. The use of the dynamic threshold value provides an advantage to the mobile terminals in that the number of handovers can be reduced, thus reducing the inconvenience and disruption caused to the user and possibly conserving battery power. The use of the dynamic threshold value provides an advantage to the mobile network operator in that if the number of handovers is reduced then there is a greater probability of retaining the connection to a mobile terminal.

Furthermore, if in step d) the network performance determined in step c) is below a predetermined network performance level, steps c) and d) may be repeated to obtain a network performance level that is equal to or greater than a predetermined network performance level. The value of the handover threshold that provides a network performance level that is equal to or greater than a predetermined network performance level may be retained.

Alternatively, if the network performance level determined in step c) is equal to or greater than a predetermined network performance level, the value of the threshold parameter may be further decreased and c) and d) repeated to determine the minimum threshold value required to provide a network performance which is equal to or greater than the predetermined network performance level.

The mobile terminal may communicate with the wireless communications network at a lower data rate if in step d) the network performance level determined in step c) is below a predetermined network performance level. Alternatively, the mobile terminal may initiate a handover to a further wireless communications network if in step d) the network performance level determined in step c) is below a predetermined network performance level.

The network parameter may comprise a network signal parameter, or alternatively a network quality of service parameter. In one embodiment of the present invention, the network parameter is the Receive Signal Strength Indicator; in a particular embodiment of the present invention the network parameter is a normalised Receive Signal Strength Indicator.

According to a second aspect of the present invention there is provided a computer program product comprising computer executable code for performing a method as described above.

The invention will be described with reference to the following Figures, which are provided by way of explanation only, in which:

Figure 1 shows a schematic depiction of a cellular communications network;
Figure 2 shows a schematic depiction of the handover processes according to the present invention being carried out by a mobile terminal;
Figure 3 shows a schematic depiction of a flow chart which describes an algorithm for varying the threshold that is used in determining whether a handover should be made; and
Figure 4 shows a schematic depiction of a flow chart which describes a further algorithm for varying the threshold that is used in determining whether a handover should be made.

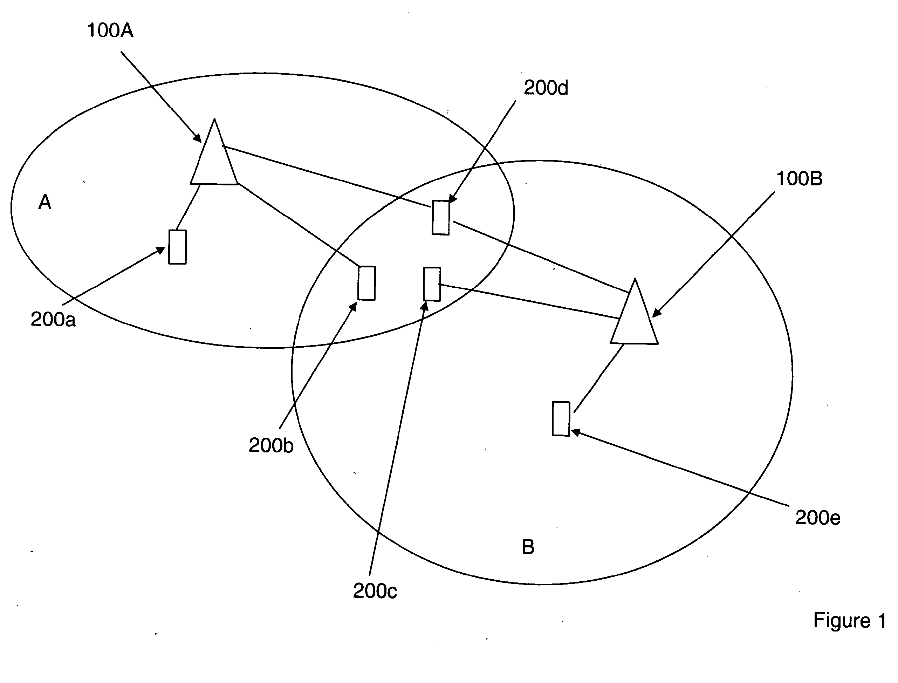

Figure 1 shows a schematic depiction of a cellular communications network that comprises cells A and B. Each of the cells comprises an access point (sometimes referred to as a base station) 100A and 100B respectively, which enable user terminals to make a connection to the cellular communications network. It will be seen that there is a partial overlap between cell A and B such that a mobile terminal located in that overlap region is able to connect to either access point 100A of cell A or access point 100B of cell B. For the purposes of explanation, the cellular communications network comprise a number of different mobile terminals 200 in communication with the cellular communications network. Mobile terminal 200a is in cell A and is in communication with access point 100A only; mobile terminal 200b is in the overlap region of cell A and cell B and is in communication with access point 100A only; mobile terminal 200c is in the overlap region of cell A and cell B and is in communication with access point 100B only; mobile terminal 200d is in the overlap region of cell A and cell B and is in communication with both access points 100A and 100B; and mobile terminal 200e is in cell B and is in communication with access point 100B only. Cells A and B (and the associated access points 100A & 100B) may be operated by the same network operator or by different network operators. It is desirable to be able to reduce the number of handovers that are carried out even if the mobile terminal is retained within the same network, as the handovers cause network overhead without providing any additional income to the network operator.

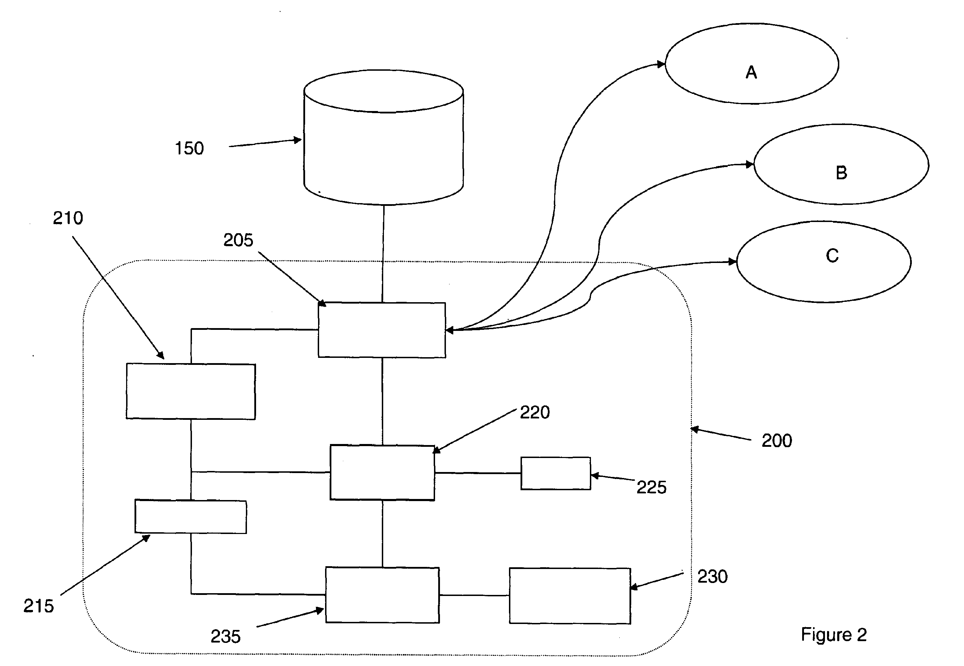

Figure 2 shows a schematic depiction of the a mobile terminal 200, in use, carrying out handover processes according to the present invention. The mobile terminal 200 comprises a radio interface 205, RSSI normalizer 210, handover manager 220, network application 215, configuration policy 225, threshold monitor 235 and threshold table 230. In use, the terminal is connected to a plurality of network cells A,B,C, ... such that the terminal can access quality and performance data concerning each of these network cells. Additionally, or alternatively, the terminal may be in communication with an information server 150, which collates and stores the performance data for one or more of the network cells. The handover manager 220 is in communication with the radio interface 205, RSSI normalizer 210, network application 215, configuration policy 225 and the threshold monitor 235. The RSSI normalizer 210 receives radio signal data from the radio interface 205 and the threshold monitor 235 receives data from the threshold table 230.

A common indicator that is used to measure network connectivity is RSSI (Receive Signal Strength Indicator). In general, a greater RSSI value means better connectivity and higher bandwidth available. However, as different radio interfaces possess different receiver capabilities and sensitivities, due to different manufacturing processes and designs, it has been found by the present inventors that relying on the exact RSSI value to indicate connectivity strength is not an appropriate approach. Consequently, in one embodiment of the present invention, an RSSI normalizer is used to convert and represent the manufacturer-specific RSSI in a percentage format. The RSSI normalizer queries the radio interface for its maximum RSSI value when the normalizer is first in communication with the radio interface (for example on power-up, or when a removable network interface is added to a terminal). The RSSI value (which is given as a value in the range of 0 - 255) at any particular instance in time can then be queried using a conventional wireless API. The normalized RSSI ($RSSI_{norm}$) can then be calculated as follows:

$$RSSI_{norm} = \frac{RSSI}{RSSIMax} \times 100\% \qquad [1]$$

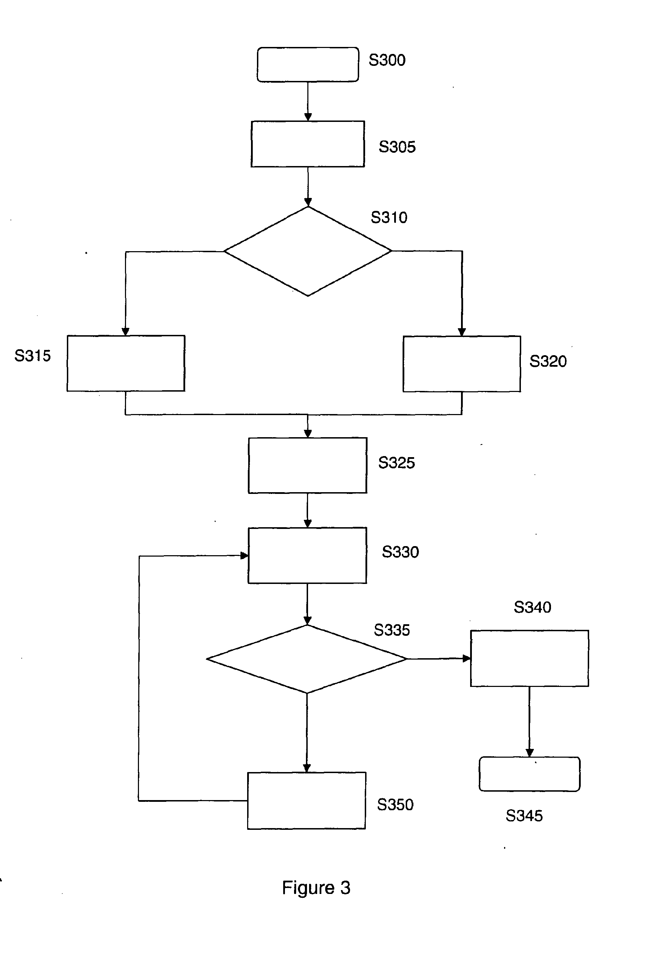

The threshold monitor 235 determines and maintains a series of triggering threshold values that are associated with a plurality of different access points and or network cells. It is also responsible for adjusting each of these threshold values to the optimal values based on the likely mobility patterns of the terminal. These may be determined in accordance with historical patterns. Upon a terminal entering a network cell, or communicating with an access point, the cell or access point will broadcast a predetermined, default threshold value to the terminal. Over time, the threshold monitor will vary the assigned threshold. An algorithm for varying the threshold will be described below with reference to Figure 3.

Although the following description of the present invention will refer to the use of $RSSI_{norm}$ as the parameter that is used to determine the threshold for executing a handover, it will be understood that the present invention may be used with any other signal, network or quality of service (QoS) parameter as the threshold parameter. A threshold parameter may be calculated based on two or more signal, network or QoS parameter.

The threshold table 230 holds data that is used by the threshold monitor when determining threshold values. Table 1 below shows an example of the data held in a threshold table. Each of the access points or network cells are identified by a unique identifier, for example the Service Set Identifier (SSID) or another appropriate identifier. For each of the access points or network cells listed in the table, there will be one or more entries, with each entry comprising a number of parameters: for each entry there is a threshold parameter and one or more performance or Quality of Service (QoS) parameter.

In Table 1 (see below) each entry comprises a threshold parameter, a packet lost parameter and a packet delay parameter (these parameters are likely to have greater relevance to a real time application such as video calling or VoIP). It will be understood that a lesser or greater number or parameters may be used and that different parameters may be selected in accordance with the specific needs of a particular network application. The data stored in the threshold table allows the Threshold Monitor to keep the performance observation of each threshold value, as to determine (over time) which threshold provides the best performance.

Table 1: Example of a Threshold Table

| SSID-1 | Threshold-1 | Packet Lost-1 | Delay-1 |
|---|---|---|---|
| | Threshold-2 | Packet Lost-2 | Delay-2 |
| | Threshold-*n* | Packet Lost-*n* | Delay-*n* |
| SSID-2 | Threshold-1 | Packet Lost-1 | Delay-1 |
| | Threshold-2 | Packet Lost-2 | Delay-2 |
| | Threshold-*n* | Packet Lost-*n* | Delay-*n* |
| ... | | | |
| SSID -*m* | Threshold-*n* | Packet Lost-*n* | Delay-*n* |

The handover manager 220 is responsible for coordinating the overall handover process. It makes the handover decision based on values collected by the threshold monitor as well as the handover policy defined by the user (see below) such as the connection cost etc. In one embodiment of the present invention, the handover manager comprises one or more handover modules. The one or more handover modules use different algorithms which process different performance metrics and thus may be used by the handover manager to perform better handover decision based on the requirements of the applications or user preferences. For example, instead of relying only on RSSI as an indicator to perform handover, throughput or delay/jitter could be another metric to consider before triggering a handover. Handover Manager is able to take advantage of existing or future algorithms as an optional module to improve the effectiveness or efficiency of the handover.

Configuration Policy 225 holds user-specified data that allows a user to define flexibly their QoS requirements as well as other higher level requirements such as price, preferred operators etc.. For example, certain users may be content to define a specified price point and to only access those services available at that price point, whereas a business user may be prepared to pay extra to gain better service, even if this means that more handovers will be initiated.

Figure 3 shows a schematic depiction of a flow chart which describes an algorithm for varying the threshold that is used in determining whether a handover should be made. The process starts at step S300 and at step S305 the terminal scans the radio environment to determine which networks are available. At step S310 the terminal detects whether it has previously been connected to this network before. If there has been a previous connection then the previous normalised RSSI threshold value used is retrieved from the threshold table at step S320; otherwise at step S315 the terminal obtains an RSSI threshold value from the network and converts into the normalised value, $RSSI_{norm}$. (see above). The RSSI threshold value may be broadcast by the network or it may be sent to the terminal in response to a specific request from the terminal.

The RSSI$_{norm}$ value then is decremented at step S325. The RSSI$_{norm}$ value will typically be decremented by 1%. At step S330 the terminal collects any other network parameters that may be required in order to determine the quality of a radio signal or the service(s) provided over the network. At step S335 the decremented RSSI$_{norm}$ value and any network parameters collected at step S330 are used to determine the performance provided by the network and whether it is acceptable. If the performance is acceptable, then at step S340 the decremented RSSI$_{norm}$ value is written back into the threshold table and the process is ended at step S345.

If the performance is not acceptable then the RSSI$_{norm}$ value is incremented at step S350 and the process returns to step S330 such that any required network parameter values are reacquired and the performance is re-evaluated at step S335. The incrementing of RSSI$_{norm}$ value at step S350 will be repeated until an adequate performance is obtained, with the resultant RSSI$_{norm}$ value being recorded in the threshold table at step S340 and then the process being ended (step S345).

The process may be repeated continually or it may be initiated on a regular basis after a pre-determined period of time. Alternatively, the process may be triggered in response to a user action, for example activating a new network application on the terminal or causing a new network protocol to be used. It will be readily understood by one skilled in the art that the process described above may be altered slightly in its implementation without departing from the teaching of the present invention. For example, the decrementing of the RSSI$_{norm}$ value may occur after the determination of the performance at step S335 such that the RSSI$_{norm}$ value is decremented until a lower limit of acceptable performance is reached, the amount by which the RSSI$_{norm}$ value is decremented may be varied in accordance with the difference between the actual performance and the required performance (i.e. if the actual performance exceeds the performance threshold by a significant margin then it may be possible to decrease the RSSI$_{norm}$ value by 2% or 5%, for example), etc.

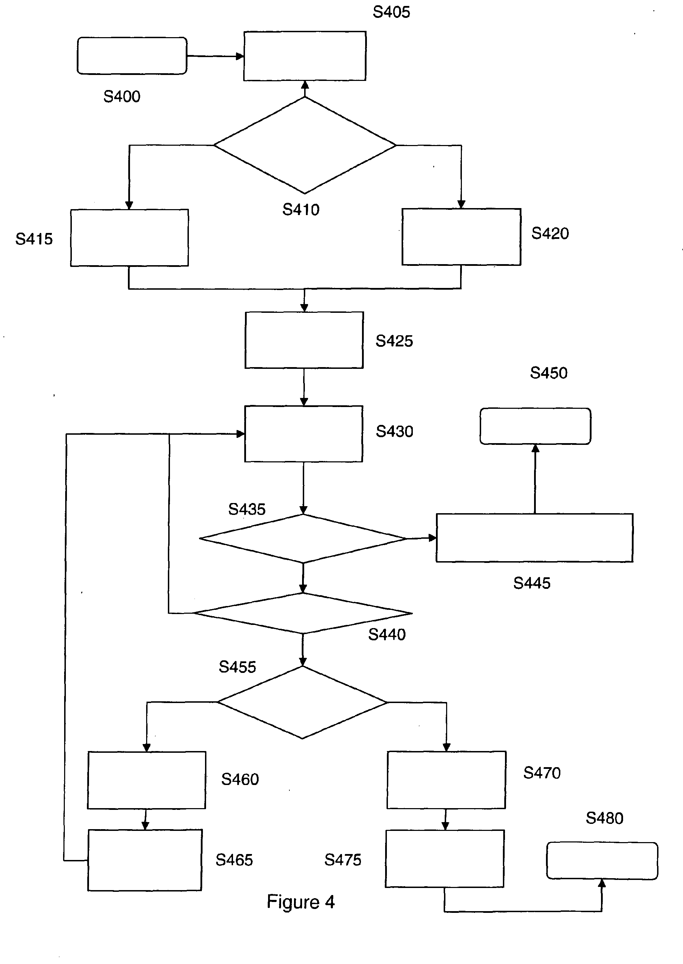

Figure 4 shows a schematic depiction of a flow chart which describes a further algorithm for varying the threshold that is used in determining whether a handover should be made. The process begins at step S400 and at step S405 the terminal scans the radio environment to determine which networks are available. At step S410 the terminal detects whether it has previously been connected to this network before. If there has been a previous connection then the previous normalised RSSI threshold value used is retrieved from the threshold table at step S420; otherwise at step S415 the terminal obtains an RSSI threshold value from the network and converts into the normalised value, RSSI$_{norm}$, (see above). The RSSI threshold value may be broadcast by the network or it may be sent to the terminal in response to a specific request from the terminal.

At step S425, the RSSI$_{norm}$ value is decremented and then, at step S430, the terminal collects any other network parameters that may be required in order to determine the quality of a radio signal or the service(s) provided over the network. At step 435, the process determines whether or not the process is to continue. It will be understood that the process may continue on a continual (or near-continual basis) whilst an application is in use that requires support (i.e. VoIP or video conferencing session) but that when that application is closed then the process is ended. Furthermore, if the network application being supported only requires that the threshold be determined on an occasional or semi-frequent basis then it may be that if the rest of the process has been completed recently (i.e. within a predetermined period of time) then there is no need for the rest of the process to be carried out.

If the process is to end, then the RSSI$_{norm}$ value is written to the threshold table at stage S445 and the process ends at step S450. Otherwise, at step S440 the decremented RSSI$_{norm}$ value and any network parameters collected at step S430 are used to determine the performance provided by the network and whether it is acceptable. If the performance is acceptable then the process returns to step S430 and the mobile terminal repeats the collection of the required network parameters.

If, for example, when the mobile terminal is stationary in an area that is within an overlap between two network cells and the network to which a mobile terminal is congested then the conventional approach would be to trigger a handover to the target network. However, in the method according to the present invention, the network application session can be adaptively configured to utilize a codec with lower bitrate that uses fewer bandwidth, hence the mobile terminal can remain connected to the current network and support the application session without handover. At step S455, the system checks whether the codec in use has been just switched, i.e. from a higher bitrate codec (such as the PCMU codec running at 128 Kbps) down to a lower bitrate codec (such as the GSM codec running at 12.2 Kbps). If it is possible to switch to a lower bit rate codec then the RSSI$_{norm}$ value is increased by 1% (step 460) and the appropriate codec switching occurs (step S465). If codec switching is not possible then the present RSSI$_{norm}$ value is written to the threshold table at step S470, a handover performed at step S475 (see below) and then the process ends at step S480. The handover performed at step S475 will be a horizontal handover to a different network operator.

The performance of a codec can be evaluated using the MOS (mean opinion score) following the E-model (for further information, please http://www.ixiacom.com/library/white_papers/display?skey=voip_quality). It will be understood alternative techniques for assessing codec performance may be used. MOS defines 5 performance levels, with a higher rating indicating a better performance. Acceptable performance is above 3, and 2 is poor, 1 is bad. The MOS level at which a codec switch or a network handover is performed may be defined as a user preference or the value may be held within the handover manager. The MOS level may be varied dependent upon the network application and other user or network conditions or parameters.

**Claims**

1. A method of operating a mobile terminal, the method comprising the steps of:

   a) establishing a handover threshold value for a network parameter, the threshold value being used in the determination of whether to perform a handover;
   b) decreasing the handover threshold value of the network parameter;
   c) determining a performance level of a wireless communications network to which the mobile terminal is connected; and
   d) if the network performance level determined in step c) is below a predetermined performance level, increasing the value of the handover threshold value, otherwise if the network performance level determined in step c) is equal to or greater than a predetermined network performance level retaining the value of the handover threshold value obtained in step b).

2. A method according to claim 1, wherein if in step d) the network performance level determined in step c) is below a predetermined network performance level, repeating steps c) and d) to obtain a network performance level that is equal to or greater than a predetermined network performance level.

3. A method according to claim 2, wherein the value of the handover threshold that provides a network performance level that is equal to or greater than a predetermined network performance level is retained.

4. A method according to claim 1, further comprising the step of:

   e) if the network performance level determined in step c) is equal to or greater than a predetermined network performance level, further decreasing the value of the handover threshold and repeating steps c) and d) to determine the minimum handover threshold required to provide a network performance level which is equal to or greater than the predetermined network performance level.

5. A method according to Claim 1, further comprising the step of:

   f) the mobile terminal communicating with the wireless communications network at a lower data rate if in step d) the network performance level determined in step c) is below a predetermined network performance level.

6. A method according to Claim 1, further comprising the step of:

   g) the mobile terminal initiating a handover to a further wireless communications network if in step d) the network performance level determined in step c) is below a predetermined network performance level.

7. A method according to any of claims 1-6, wherein the network parameter comprises a wireless signal parameter.

8. A method according to any of claims 1-6, wherein the network parameter comprises a wireless quality of service parameter.

9. A method according to Claim 7, wherein the network parameter comprises the Receive Signal Strength Indicator.

10. A method according to Claim 9, wherein the network parameter comprises the normalised Receive Signal Strength Indicator.

11. A method according to any of claims 1 to 6, wherein the network parameter comprises a value calculated from a plurality of other parameters selected from wireless signal parameters and/or wireless quality of service parameters.

12. A computer program product, comprising computer executable code for performing a method according to any of Claims 1 to 11.

Figure 1

Figure 2

Figure 3

Figure 4

**European Patent Office**

**EUROPEAN SEARCH REPORT**

Application Number

EP 07 25 2210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/221828 A1 (WAKUTA TATSUYA [JP] ET AL) 6 October 2005 (2005-10-06)<br>* paragraph [0066] *<br>----- | 1 | INV.<br>H04Q7/38 |
| A | US 2007/026861 A1 (KUHN EDGAR W [DE] ET AL) 1 February 2007 (2007-02-01)<br>* paragraph [0027] *<br>----- | 1-12 | |

TECHNICAL FIELDS
SEARCHED    (IPC)

H04Q

The present search report has been drawn up for all claims

| Place of search | Date of completion of the search | Examiner |
|---|---|---|
| The Hague | 26 October 2007 | DIONISI, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 1 998 583 A1

## ANNEX TO THE EUROPEAN SEARCH REPORT
## ON EUROPEAN PATENT APPLICATION NO.

EP 07 25 2210

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2007

| Patent document cited in search report | Publication date | Patent family member(s) | Publication date |
|---|---|---|---|
| US 2005221828 A1 | 06-10-2005 | JP 2001078242 A | 23-03-2001 |
| US 2007026861 A1 | 01-02-2007 | CN 1917704 A<br>EP 1771022 A1<br>JP 2007043688 A<br>KR 20070014011 A | 21-02-2007<br>04-04-2007<br>15-02-2007<br>31-01-2007 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. RAMANI et al.** SyncScan: Practical Fast Handoff for 802.11 Infrastructure Networks. *Proceedings of the IEEE INFOCOM Conference,* March 2005

- **D. JAYARAM ; N. SREENIVASULU.** Seamless Call Transfer between Cellular (GSM) and Enterprise (VOWLAN) Networks. *IASTED Conference Networks and Communication Systems,* 2006